# EUROPÄISCHE PATENTSCHRIFT

(11) **EP 1 123 784 B1**
(45) Veröffentlichungstag und Bekanntmachung des Hinweises auf die Patenterteilung: **08.04.2009**
(21) Anmeldenummer: 01103255.4
(22) Anmeldetag: 12.02.2001
(51) Int. Cl.: B25J 15/04, B25J 19/00

(54) **Werkzeugadapter an einer Roboterschnittstelle**
Tool adapter on a robotic interface
Adaptateur d'outil à l'interface d'un robot

(30) Priorität: 11.02.2000 DE 10006226
(43) Veröffentlichungstag der Anmeldung: 16.08.2001
(73) Patentinhaber: Schunk GmbH & Co. KG Spann- und Greiftechnik, 74348 Lauffen (DE)
(72) Erfinder: Franz, Michael, 74360 Ilsfeld (DE)
(74) Vertreter: Dreiss

(56) Entgegenhaltungen:
- EP-A- 1 099 520
- WO-A-99/60667
- US-A- 4 683 912
- PATENT ABSTRACTS OF JAPAN vol. 018, no. 079 (M-1557), 9. Februar 1994 (1994-02-09) -& JP 05 293788 A (DAIHEN CORP), 9. November 1993 (1993-11-09)

## Beschreibung

Die Erfindung betrifft einen Werkzeugadapter an einer genormten mechanischen Roboterschnittstelle, mit einer Drehdurchführungseinrichtung für fluide Medien und mit einer Schleifringanordnung zur Übertragung von elektrischen Signalen oder Strom, wobei die Drehdurchführungseinrichtung eine Welle mit einem zylindrischen Abschnitt und einem sich daran anschließenden radial vorstehenden Flanschabschnitt und mit in ihrer Längsrichtung verlaufenden Medienkanälen und einen die Welle aufnehmenden, ringförmigen und mit einer Medienzufuhr zusammenwirkenden Gehäuseteil mit zur Welle hin offenen konzentrischen Ringnuten umfasst, wobei die Ringnuten über Zuführöffnungen in der Welle mit den Medienkanälen kommunizieren.

Mechanische Roboterschnittstellen sind genormt; es existiert die Norm DIN ISO 9409-1, Stand 1996. Sie legt die Hauptmaße, Kennzeichnung und Markierung für eine runde Plattenschnittstelle von Industrierobotern fest, an denen Endeffektoren also Werkzeuge im weitesten Sinne, wie z.B. Greifer oder eine Schweißzange, angebracht werden können.

Wenn vorstehend von Werkzeugadapter gesprochen wird, so wird hierunter ein an der mechanischen Roboterschnittstelle montierbarer Adapter zur unmittelbaren Aufnahme des Werkzeugs oder ein sogenannter Roboterkopf, der ebenfalls an der Schnittstelle montiert wird und als Werkzeugwechsler einsetzbar ist, verstanden. Im letzten Fall nimmt der Roboterkopf als Werkzeugwechsler das Werkzeug nicht unmittelbar auf, sondern unter Zwischenschaltung einer weiteren Werkzeughaltevorrichtung.

Aus DE 197 38 934 A1 ist ein Werkzeugadapter für eine Roboterschnittstelle bekannt, mit einer Drehdurchführungseinrichtung für fluide Medien und mit einer Welle mit Medienkanälen, wobei die Drehdurchführungseinrichtung ringscheibenförmige Segmente aufweist, die von entgegengesetzten Seiten auf einen Wellenansatz aufschiebbar sind, der dann an der Stirnseite der Welle befestigt wird. Eine Schleifringanordnung zur Übertragung elektrischer Signale ist nicht vorgesehen und könnte bei dem bekannten Aufbau auch nicht montiert werden.

Aus JP-A-05293788 ist ein Werkzeugadapter mit einer Drehdurchführung für fluide Medien und mit einer Anordnung zur Übertragung von Strom und elektrischen Steuersignalen bekannt, wobei die Komponenten im weitesten Sinne ringscheibenförmig sind und alle von derselben Seite auf die Welle aufschiebbar sind.

US-A-4,683,912 zeigt eine Drehdurchführung mit modularem Aufbau für fluidische Medien für eine Roboterschnittstelle. Eine Anordnung zur Übertragung von Strom oder elektrischen Signalen ist nicht vorgesehen.

Der Erfindung liegt die Aufgabe zugrunde, einen Werkzeugadapter der eingangs beschriebenen Art an einer genormten Roboterschnittstelle so auszubilden, dass er den individuellen Anforderungen entsprechend gestaltet werden kann und einen minimalen Bauraum einnimmt.

Diese Aufgabe wird durch einen Werkzeugadapter mit den Merkmalen des Anspruchs 1 gelöst.

Es wird hierdurch eine einfache baukastenartige Montierbarkeit erreicht, und der Adapter kann entsprechend den Anforderungen gestaltet werden.

Der Gehäuseteil der Drehdurchführungseinrichtung umfasst mehrere ringförmige mit der Medienzuführung zusammenwirkende Segmente mit wenigstens einer zur Welle hin offenen Ringnut, und die jeweils verwandte Welle weist eine der Anzahl der Segmente angepasste Länge und mit der jeweiligen Ringnut der Segmente kommunizierende Zuführöffnungen auf.

Es wird also erfindungsgemäß vorgeschlagen, bei der kombinierten Drehdurchführungseinrichtung und Schleifringanordnung ein System aus mehreren Gehäusesegmenten und mehreren Wellen mit entsprechend der Anzahl der Segmente angepasster Länge vorzuhalten, die dann zur Bildung des Werkzeugadapters miteinander in der erforderlichen Weise baukastenartig kombinierbar sind.

Es hat sich dabei als vorteilhaft erwiesen, dass das Segment der Schleifringanordnung zwischen dem werkzeugseitig letzten Segment der Drehdurchführungseinrichtung und einem radialen Flanschabschnitt der Welle angeordnet ist, welcher das feststehende Gehäuseteil axial übergreift. Auf diese Weise kann der bewegbare Teil der Schleifringanordnung mit dem Flanschabschnitt und damit mit der Welle drehfest gekoppelt werden.

Die Schleifringanordnung weist einen mit der Welle drehfesten Schleifringteller und einen mit dem Gehäuseteil der Drehdurchführungseinrichtung ortsfesten Bürstenteller auf.

Es hat sich desweiteren als vorteilhaft erwiesen, dass der ortsfeste Teil der Schleifringanordnung an einem ringförmigen Haltesegment unverdrehbar angeordnet ist, welches seinerseits ortsfest mit dem Gehäuseteil der Drehdurchführungseinrichtung für Medien vorgesehen ist. Dieses ringförmige Haltesegment ist vorzugsweise nach radial innen zu axial abgesetzt ausgebildet und bildet somit einen flachen Aufnahmeraum für den bewegbaren Teil der Schleifringanordnung, welche vorzugsweise von dem Bürstenteller gebildet ist.

Das ringförmige Haltesegment für den ortsfesten, d.h. roboterfesten Teil der Schleifringanordnung könnte in an sich beliebiger Weise gegenüber dem nicht rotierenden Teil des freien Endes des Roboterarms ortsfest bzw. unverdrehbar fixiert werden. Es erweist sich indessen als vorteilhaft, wenn das ringförmige Haltesegment über Verbindungselemente unverdrehbar mit dem ihm benachbarten Gehäusesegment des Gehäuseteils der Drehdurchführungseinrichtung verbunden ist. Hierfür sind vorzugsweise form- und/oder klemmschlüssig wirkende Verbindungselemente vorgesehen. Nach einer bevorzugten Ausführungsform der Erfindung wirken die Verbindungselemente zwischen einander zugewandten axialen Anlageflächen der Segmente und sind somit von außen nicht einsehbar. Die Verdrehsicherung könnte also durch eine komplementäre Ausbildung der Anlageflächen mittels Ausnehmungen und darin eingreifende Vorsprünge der anderen Seite ausgebildet sein. Es erweist sich indessen als vorteilhaft, wenn in den einander zugewandten axialen Anlageflächen der Segmente miteinander fluchtende Sacklöcher vorgesehen sind, in denen zur Herbeiführung einer Verdrehsicherung ein in beide Sacklöcher eingreifendes, vorzugsweise stift- oder stegförmiges Sicherungs- oder Zentrierelement eingesetzt ist.

Es wäre ansich denkbar, dass die Welle mit ihrer schnittstellenseitigen Stirnfläche direkt an die genormte und ihrerseits um die letzte Achse der rotierend antreibbaren Schnittstelle des Roboters angeschraubt ist. Nach einer ganz besonders bevorzugten Ausführungsform der Erfindung ist die Welle mit ihrer schnittstellenseitigen Stirnfläche eines im Wesentlichen zylindrischen Wellenabschnitts mit einer Flanschplatte verschraubt, die ihrerseits zuvor an die genormte Schnittstelle des Roboters anschraubbar ist bzw. angeschraubt wurde. Die Flanschplatte übergreift - wie der radiale Flanschabschnitt der Welle auf der werkzeugzugewandten Seite - den Gehäuseteil in radialer Richtung axial. Dies bedeutet, dass die gegenüber dem Roboterflansch ortsfesten Segmente in axialer Richtung von dem werkzeugzugewandten Flanschabschnitt der Welle und von der Flanschplatte begrenzt wird. Der Gehäuseteil der Drehdurchführungseinrichtung ist seinerseits über eine nach radial aussen vorstehende Halterung gegenüber dem Roboterflansch verdrehgesichert.

Es erweist sich desweiteren als vorteilhaft, wenn die auf die Welle aufgebrachten Segmente über ein Sicherungselement, welches vorzugsweise nach Art eines Sprengrings oder als O-Ring ausgebildet sein kann, am zylindrischen Abschnitt der Welle gehalten sind. Wenn nämlich der Werkzeugadapter von der mechanischen Schnittstelle gelöst wird, so wird nach der vorstehend beschriebenen Ausführungsform der Erfindung die Welle von der.zumindest zunächst noch an der Schnittstelle verbleibenden Flanschplatte abgeschraubt, und es besteht dann nicht die Gefahr, dass der Gehäuseteil von dem axialen Abschnitt der Welle abgleitet.

Die nach radial aussen vorstehende Halterung, welche eine drehfeste Kopplung des Gehäuseteils der Drehdurchführungseinrichtung bzw. eines Teils der Schleifringanordnung mit dem Roboterflansch bewirkt, kann in vorteilhafter Weise eine axiale Öffnung aufweisen, in die ein roboterflanschfester Stift zur Herbeiführung der Verdrehsicherung eingreifen kann. Wenn der Werkzeugadapter an der Schnittstelle montiert wird, so ist hierdurch gleich die korrekte Position des Gehäuseteils der Drehdurchführungseinrichtung exakt vorgegeben, und im Übrigen ist die Herstellung der drehfesten Kopplung sehr einfach.

Weitere Einzelheiten, Merkmale und Vorteile der Erfindung ergeben sich aus den beigefügten Ansprüchen, für deren Merkmale auch jeweils für sich in beliebiger Kombination mit weiteren Merkmalen Schutz beansprucht wird, und aus der zeichnerischen Darstellung und nachfolgenden Beschreibung einer bevorzugten Ausführungsform des erfindungsgemäßen Werkzeugadapters. In der Zeichnung zeigt:
- Figur 1: eine perspektivische Ansicht eines erfindungsgemäßen Werkzeugadapters;
- Figur 2: eine Draufsicht auf den Werkzeugadapter nach Figur 1;
- Figur 3: eine Schnittansicht entsprechend der Pfeile A-A in Figur 2;
- Figur 4: eine Schnittansicht entsprechend der Pfeile B-B in Figur 2;
- Figur 5: eine Schnittansicht entsprechend der Pfeile C-C in Figur 2;
- Figur 6: eine Schnittansicht entsprechend der Pfeile D-D in Figur 2;
- Figur 7: eine Schnittansicht eines Adapters, wobei die Drehdurchführungseinrichtung zwei Gehäusesegmente umfasst, und
- die Figuren 8 und 9: verdeutlichen die Montage der Schleifringanordnung.

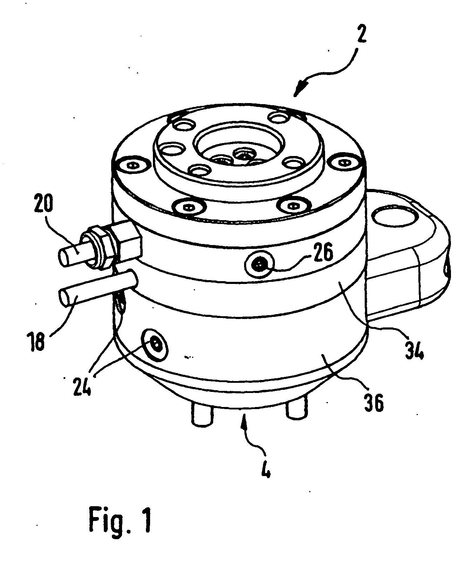

Die Figuren zeigen einen insgesamt mit dem Bezugszeichen 2 bezeichneten Werkzeugadapter, der mit seiner in Figur 1 unteren Seite 4 an eine nach DIN ISO 9409-1 genormte, um die letzte Achse rotierend antreibbare Roboterschnittstelle montierbar ist.

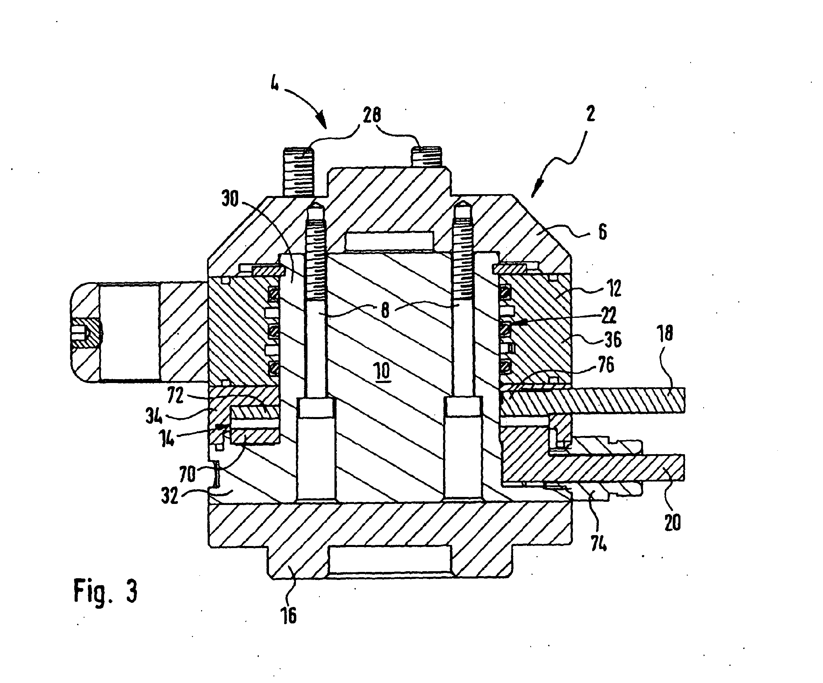

Wie sich am Besten den Schnittdarstellungen (insbesondere Figur 3) entnehmen lässt, ist der Werkzeugadapter 2 aufgebaut aus einer an die nicht dargestellte mechanische Roboterschnittstelle anschraubbaren Flanschplatte 6, einer mit der Flanschplatte 6 über Schrauben 8 drehfest verbindbaren Welle 10 und einem die Welle aufnehmenden Gehäuseteil 12, einer Schleifringanordnung 14 und einer werkstückseitigen, mit der Welle 10 drehfest verbundenen Montageplatte 16. Ein roboterflanschfester, also nicht rotierend antreibbarer Kabelabgang ist mit dem Bezugszeichen 18 versehen und ein werkzeugseitiger, also mit der Welle 10 drehfester Kabelabgang mit dem Bezugszeichen 20. Der Gehäuseteil 12 und die Welle 10 bilden eine noch im Einzelnen zu beschreibende Drehdurchführungseinrichtung (angedeutet mit dem Bezugszeichen 22 in Figur 3), deren roboterseitige Medienzuführung über verschließbare Medienzuführöffnungen 24 bzw. deren werkstückseitige Medienkommunikation über Öffnungen 26 erfolgt.

Im Einzelnen ist der Werkzeugadapter 2 wie folgt aufgebaut:
Die Flanschplatte 6 ist über Schrauben 28 drehfest mit der rotierend antreibbaren mechanischen Schnittstelle des Roboterflanschs verschraubt. Bei der Montage des Werkzeugadapters an der Roboterschnittstelle wird diese Flanschplatte 6 zuerst festgeschraubt. Danach wird die Welle 10 mittels der bereits erwähnten Schrauben 28 gegen die Flanschplatte 6 drehfest verschraubt.

Die Welle 10 umfasst einen zylindrischen Abschnitt 30 und einen sich daran anschließenden auf der Werkzeug zugewandten Seite vorgesehenen radial vorstehenden Flanschabschnitt 32. Auf den zylindrischen Abschnitt 30 der Welle 10 ist die Schleifringanordnung 14 und die Drehdurchführungseinrichtung 22, die beide noch näher zu beschreibende ringsegmentförmige Bauteile aufweisen, von der selben Seite auf den zylindrischen Abschnitt der Welle aufgeschoben, derart dass die Schleifringanordnung 14 axial gegen den radialen Flanschabschnitt 32 der Welle 10 anliegt. Die Schleifringanordnung 14 und die Drehdurchführungseinrichtung 22 sind wie Ringscheibensegmente 34, 36 auf den zylindrischen Abschnitt 30 aufgeschoben. Wenn die Welle 10 an die Flanschplatte 6 geschraubt ist, so wird das Ringscheibensegment 36 der Drehdurchführungseinrichtung 22 axial von der Flanschplatte 6 begrenzt, die einen größeren Durchmesser aufweist als der zylinderförmige Abschnitt 30 der Welle 10.

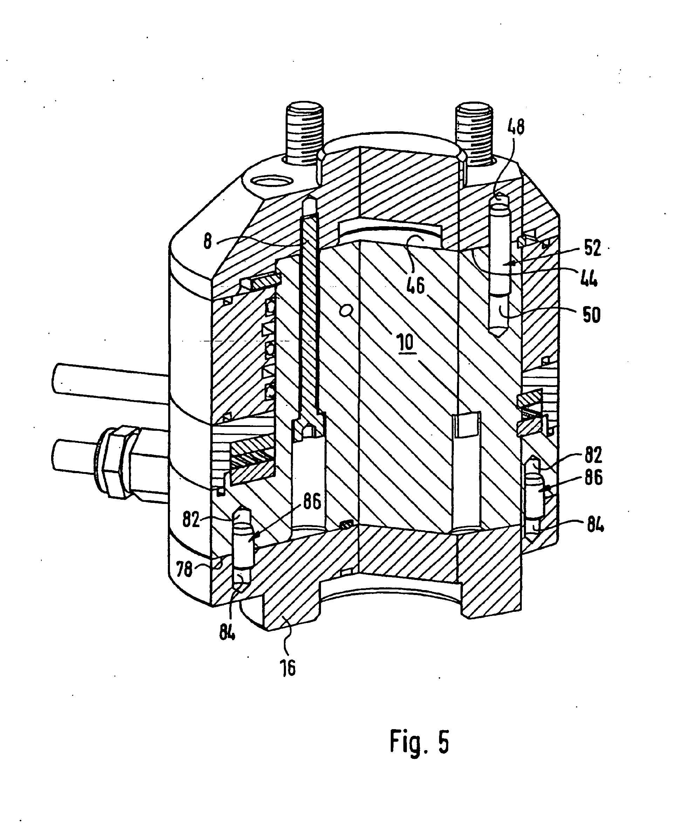

Um die Welle 10 mit den vorstehend genannten Komponenten vormontiert handhaben zu können, werden die Ringscheibensegmente 34, 36 auf dem zylinderförmigen Abschnitt 30 der Welle 10 mittels eines Sicherungselements 38 in Form eines Sprengrings 40, der in eine Umfangsnut 42 des zylindrischen Wellenabschnitts 30 einklipsbar ist, gehalten. Die Welle 10 kann somit als vormontierte Einheit an der Flanschplatte 6 festgeschraubt werden. Zur Erreichung einer höchstmöglichen Positioniergenauigkeit sind in den gegeneinander anlegbaren Stirnseiten 44, 46 von Flanschplatte 6 bzw. von Welle 10 miteinander fluchtende Sacklöcher 48, 50 ausgesehen, in welche ein zylindrischer Stift 52 als Positionier- und Zentrierhilfe eingesetzt ist (Figur 5).

Die Drehdurchführungseinrichtung 22 ist folgendermaßen ausgebildet: An dem nicht dargestellten Roboterflansch münden Anschlüsse für fluide Medien, wie z.B. Druckluft, Kühlflüssigkeit, Hydraulikflüssigkeit. Diese Anschlüsse können mit den Medienzuführöffnungen 24 (Figur 1) des Ringscheibensegments 36 verbunden werden. Von dort führt eine Bohrung zur Innenseite des Ringscheibensegments 36 des Gehäuseteils 12 und mündet in jeweils einer konzentrischen Nut 54, 56. Beide Nuten 54, 56 sind jeweils axial über O-Ringe 58 gegeneinander abgedichtet, wobei die O-Ringe 58 ihrerseits in Ringnuten angeordnet sind und durch Anlage an den zylindrischen Wellenabschnitt 30 der Welle 10 abdichtend verformt werden. Wenn das Ringscheibensegment 36 auf den zylindrischen Wellenabschnitt 30 der Welle 10 aufgeschoben ist, so ist es so positioniert, dass jeweils eine Zuführöffnung 60 in dem zylindrischen Wellenabschnitt 30 in die jeweilige Nut 54, 56 mündet. Radial innen mündet die jeweilige Zuführöffnung 60 in einen jeweiligen in Längsrichtung der Welle 10 verlaufenden Medienkanal 62. Im Bereich des werkzeugzugewandten Endes des Medienkanals 62 verläuft eine Öffnung 26 in dem radialen Flanschabschnitt 32 der Welle 10 nach radial außen und bildet einen Medienanschluss für das Werkzeug.

Wenn sich die Welle 10 gegenüber dem ortsfesten Ringscheibensegment 36 des Gehäuseteils 12 der Drehdurchführungseinrichtung 22 dreht, so befindet sich die Zuführöffnung 60 stets in Kommunikation mit der jeweiligen Nut 54 und erlaubt somit eine Strömungskommunikation zwischen der Medienzuführöffnung 24 und der umdrehenden Öffnung 26.

Das Ringscheibensegment 36 wird über eine Halterung 64 drehfest mit dem nicht dargestellten freien Ende des Roboterarms verbunden. Die Halterung 64 springt radial von der Außenseite des Ringscheibensegments 36 vor und ist als separates Teil gegen die äußere Mantelfläche des Ringscheibensegments 36 anschraubbar. Die Halterung 64 umfasst eine axiale Öffnung 66, in die ein vom freien Ende des Roboterarms axial vorstehender Stift eingreifen kann. Zudem kann über einen Gewindestift 68 eine Klemmung gegen den nicht dargestellten Stift vorgenommen werden.

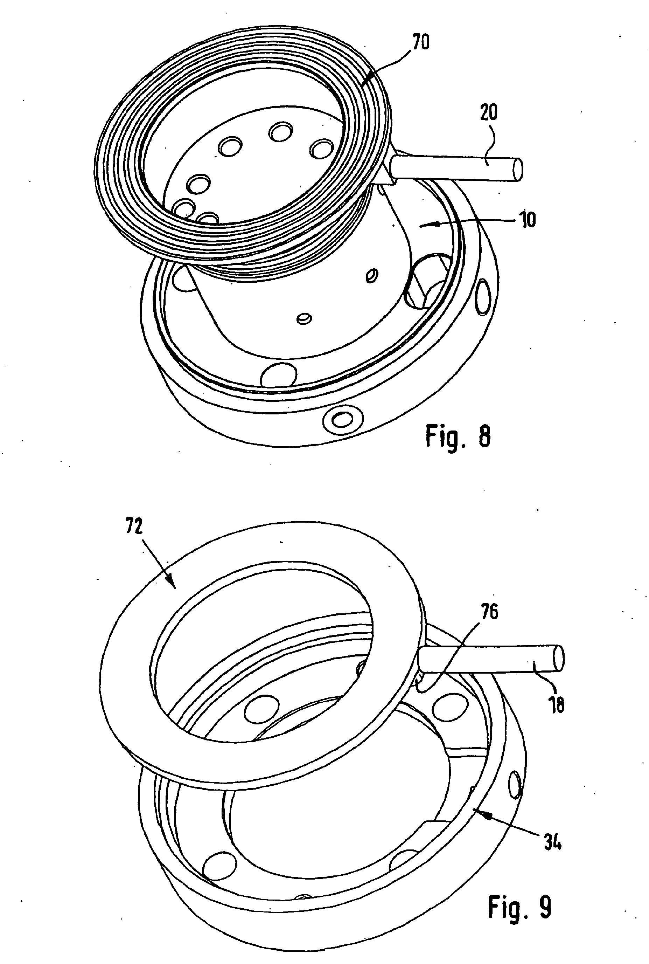

Die Schleifringanordnung 14 ist wie folgt ausgebildet und montiert: Sie umfasst einen mit der Welle 10 drehfest verbundenen Schleifringteller 70 und einen gegenüber dem Roboterflansch ortsfesten Bürstenteller 72. Der Schleifringteller 70 mit angedeuteten konzentrisch verlaufenden Leitungsbahnen ist auf den zylinderförmigen Wellenabschnitt 30 aufgeschoben und liegt gegen die axiale innere Seite des radialen Flanschabschnitts 32 der Welle 10 an. Über den Kabelabgang und eine entsprechend komplementäre Ausbildung von Teller 70 und Flanschabschnitt 32 ist der Schleifringteller 70 in vorbestimmter Umdrehungsposition gegenüber dem Flanschabschnitt 32 der Welle 10 orientiert und drehfest formschlüssig an der Welle gehalten (s. Figur 8). Zur Fixierung ist eine Kabelverschraubung 74 vorgesehen.

Der korrespondierende Bürstenteller 72 ist in das Ringscheibensegment 34 eingesetzt und von diesem gehalten. Wiederum erfolgt eine drehfeste Anordnung in dem Ringscheibensegment 34 über den Kabelabgang 18 und eine aus den Figuren 3 und 9 ersichtliche formschlüssige Ausformung 76. Bei Drehung der Welle 10 wird der Schleifringteller 70 mitbewegt und über die Kontaktbürsten des Bürstentellers 72 findet auch bei unbegrenzter Drehung eine elektrische Verbindung statt, die über die Kabelabgänge 18, 20 zum Roboterflansch bzw. zu dem mitbewegten Werkzeug übertragen werden kann.

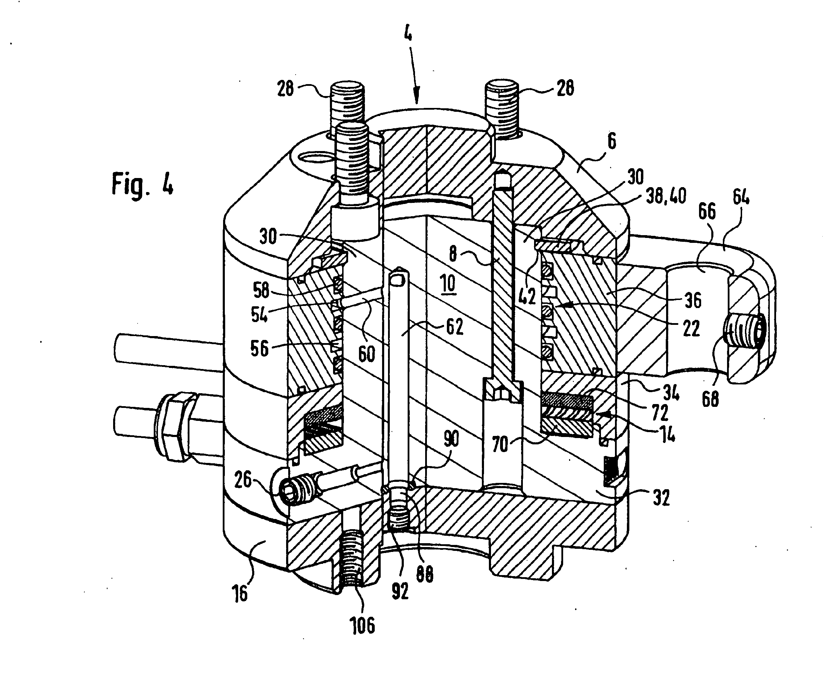

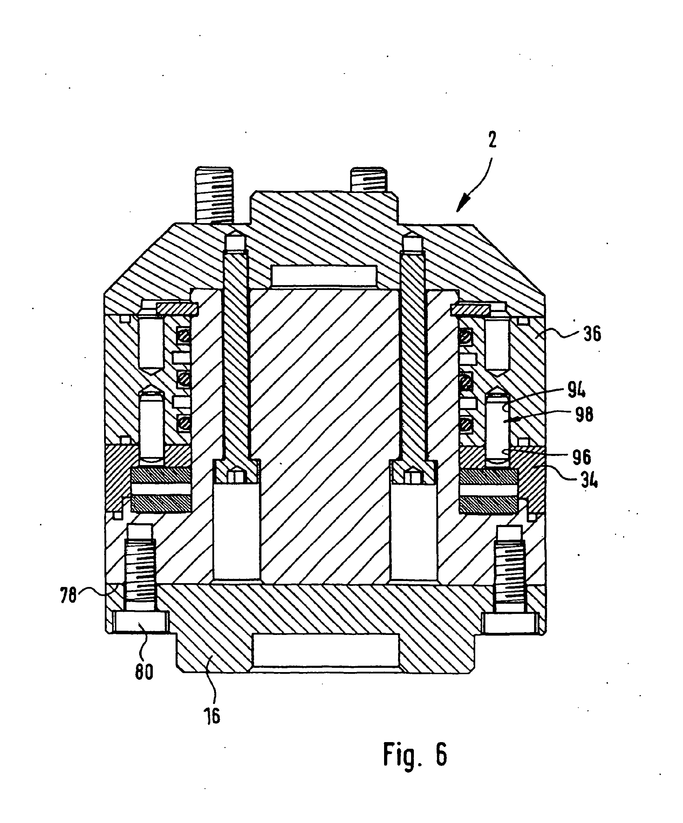

Schließlich ist gegen die roboterabgewandte Stirnseite 78 der Welle 10 die Flanschplatte 16 über Schrauben 80 (Figur 6) angeschraubt. Als Zentriermittel sind wiederum korrespondierende Sacklöcher 82 und 84 und darin eingesetzte Stifte 86 vorgesehen (Figur 5). In der Flanschplatte sind mit den Medienkanälen der Welle 10 fluchtende Durchgangsöffnungen 88 (Figur 4) vorgesehen.

Zwischen der Stirnseite 78 der Welle 10 und der Flanschplatte 16 ist zu Abdichtungszwecken ein O-Ring 90 eingesetzt. Die Durchgangsöffnung 88 lässt sich über einen Gewindestift 92 dichtend verschließen.

Mit dem erfindungsgemäßen System werden der Gehäuseteil 12 der Drehdurchführungseinrichtung 22 sowie der ortsfeste Teil der Schleifringanordnung 14 in Form von Ringscheibensegmenten 36 bzw. 34 ausgebildet, die auf den zylindrischen Wellenabschnitt 30 aufschiebbar sind. Es ist damit möglich, ein baukastenartiges Sortiment vorzuhalten, welches es ermöglicht, entweder vor Ort beim Kunden oder bereits werksseitig einen Werkzeugadapter mit bestimmten Anforderungen bereitzustellen. Wenn beispielsweise eine Schleifringanordnung nicht gewünscht wird, so kann auf den Einsatz des Schleifringtellers 70 und des Bürstentellers 72 verzichtet werden, es wird solchenfalls das Ringscheibensegment 34 ohne weitere Komponenten auf den Wellenabschnitt 30 aufgeschoben. Je nach Anzahl der zuzuführenden Medien kann ein Ringscheibensegment 36 oder mehrere Ringscheibensegmente 36 verwendet werden, wobei im letzten Fall eine Welle 10 entsprechender Länge verwendet werden muss. Es wird also erfindungsgemäß ein System von mehreren Wellen 10 mit entsprechend der Anzahl der zu verwendenden Ringscheibensegmente 36 der Drehdurchführungseinrichtung 22 angepasster Länge und eine Anzahl von derartigen Ringscheibensegmenten 36 vorgehalten. Anstelle mehrerer Wellen unterschiedlicher Länge wäre es auch denkbar scheibenförmige Wellensegmente vozuhalten, die der Längs des jeweiligen Segments der Drehdurchführungseinrichtung bzw. der Schleifringanordnung entspricht. Diese Wellensegmente könnten in derselben Weise miteinander verbunden werden wie die Segmente der Drehdurchführungseinrichtung.

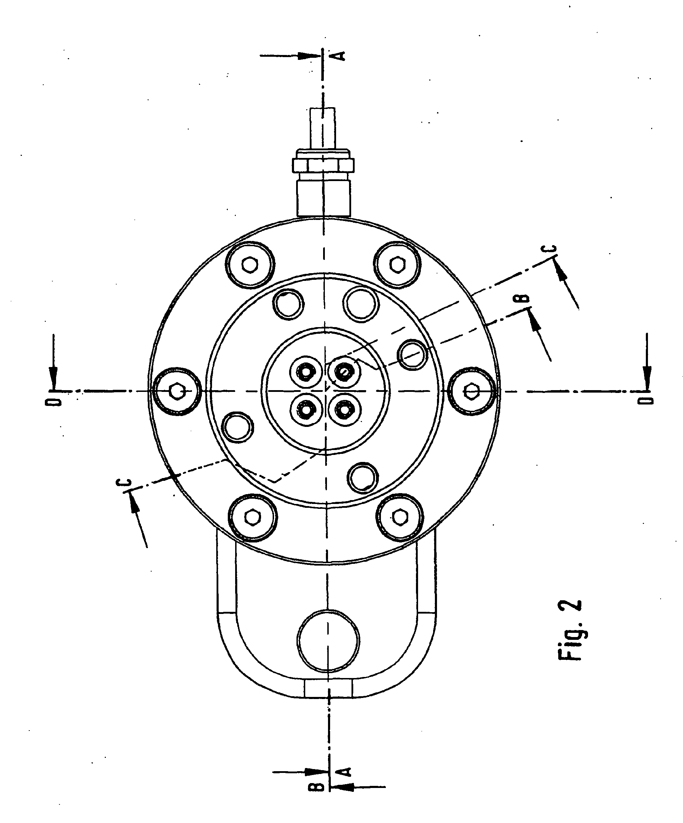

Die vorstehend diskutierten Figuren 1 bis 6 zeigen einen Werkzeugadapter 2 mit einem Ringscheibensegment 36 der Drehdurchführungseinrichtung 22, wobei aus Figur 6 ersichtlich ist, dass das Ringscheibensegment 36 der Drehdurchführungseinrichtung 22 und das Ringscheibensegment 34 der Schleifringanordnung 14 über miteinander fluchtende Sacklöcher 94, 96 in den einander zugewandten Stirnseiten der Ringscheibensegmente 36, 34 und darin eingesetzte Stifte 98 gegeneinander zentriert und drehfest miteinander verbunden sind. Es ist daher möglich, dass die bereits erwähnte radial vorstehende Halterung 64 lediglich mit dem Ringscheibensegment 36, nicht aber mit dem Ringscheibensegment 34 verbunden ist, wobei die drehfeste Kopplung der beiden Segmente 36, 34 über eine ansich beliebige Drehmitnahme, die in bevorzugter Weise, wie vorstehend beschrieben, ausgebildet ist, bewerkstelligt wird.

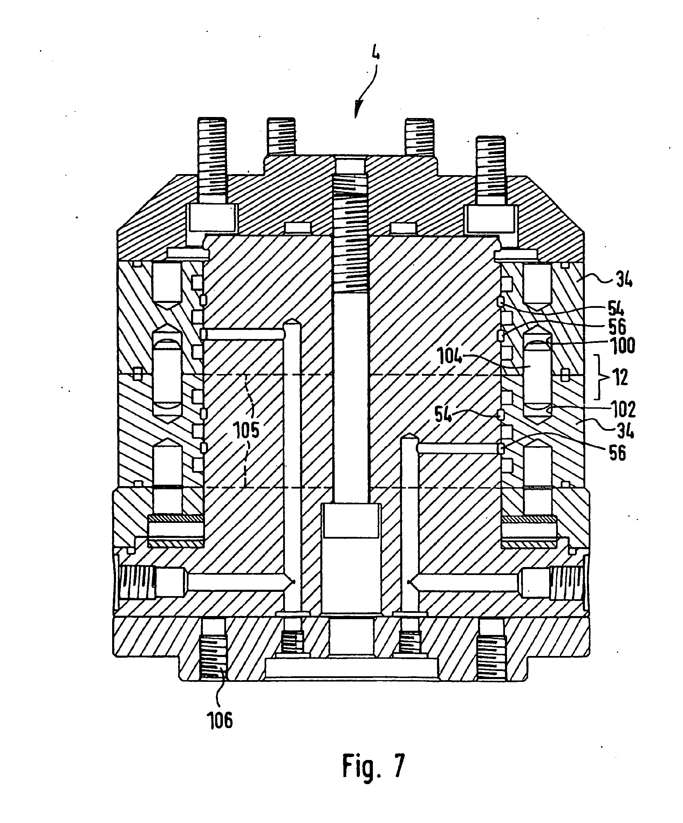

Figur 7 zeigt eine Ausführungsform eines Werkzeugadapters mit zwei Ringscheibensegmenten 34, welche den Gehäuseteil 12 der Drehdurchführungseinrichtung 22 bilden. Jedes Ringscheibensegment 34 verfügt über zwei in der Figur 7 nicht dargestellte Medienzuführöffnungen, welche in konzentrischen Ringnuten 54, 56 münden. Im dargestellten Fall können also vier getrennte fluide Medien vom ortsfesten (im Sinne von nicht rotierenden) freien Ende des Roboterarms zu einem nicht dargestellten rotierenden Werkzeug geleitet werden. Die Ringscheibensegmente 34 sind gegeneinander über miteinander fluchtende Sacklöcher 100, 102 und darin eingesetzte Stifte 104 zentriert und drehfest miteinander verbunden. In diesem Fall genügt es also ebenfalls, eine radial vorstehende Halterung nur an einem der Ringscheibensegmente 34 vorzusehen. Wie vorstehend erwähnt könnte auch die Welle zylindrische Segmente umfassen, die in entsprechender Weise miteinander verbunden sind. Um diese Segmentteilung anzudeuten, sind gestrichelte Linien 105 eingezeichnet.

An der Montageplatte 16 kann über die dort vorgesehenen Montageöffnungen 106 (Figuren 4, 7) ein ansich beliebiges Werkzeug, beispielsweise ein Greifer, eine Schweißzange oder ein sonstiges Werkzeug befestigt werden. Es besteht die Möglichkeit, über die Öffnungen 26 und 92 eine Strömungskommunikation mit entsprechenden nicht dargestellten Medienanschlüssen des nicht dargestellten Werkzeugs herzustellen.

## Patentansprüche

1. Werkzeugadapter an einer genormten Roboterschnittstelle, mit einer Drehdurchführungseinrichtung (22) für fluide Medien und mit einer Schleifringanordnung (14) zur Übertragung von elektrischen Signalen oder Strom, wobei die Drehdurchführungseinrichtung (22) eine Welle (10) mit einem zylindrischen Abschnitt (30) und einem sich daran anschließenden radial vorstehenden Flanschabschnitt (32) und mit in ihrer Längsrichtung verlaufenden Medienkanälen (62) und einen die Welle (10) aufnehmenden, ringförmigen und mit einer Medienzuführung zusammenwirkenden Gehäuseteil (12) mit zur Welle (10) hin offenen konzentrischen Ringnuten (54, 56) umfasst, wobei die Ringnuten (54, 56) über Zuführöffnungen (60) in der Welle (10) mit den Medienkanälen (62) kommunizieren, wobei der Gehäuseteil (12) der Drehdurchführungseinrichtung (22) und die Schleifringanordnung (14) als ringscheibenförmige Segmente (36, 34) alle von derselben Seite auf die Welle (10) aufschiebbar sind, **dadurch gekennzeichnet, dass** der Flanschabschnitt (32) auf der werkzeugzugewandten Seite der Welle (10) ist, dass der Gehäuseteil (12) der Drehdurchführungseinrichtung (22) mehrere solcher ringscheibenförmiger mit der Medienzuführung zusammenwirkender Segmente (36) mit wenigstens einer zur Welle (10) hin offenen Ringnut (54) umfasst und die jeweils verwandte Welle (10) eine der Anzahl der Segmente (36) angepasste Länge und mit der jeweiligen Ringnut (54) der Segmente (36) kommunizierende Zuführöffnungen aufweist, und dass das ringscheibenförmige Segment (34) der Schleifringanordnung (14) zwischen dem werkzeugseitig letzten Segment (36) der Drehdurchführungseinrichtung (22) und dem radialen Flanschabschnitt (32) der Welle (10) angeordnet ist, welcher das feststehende Gehäuseteil (12) axial übergreift, und dass die Schleifringanordnung (14) einen mit dem Flanschabschnitt (32) drehfesten Schleifringteller (70) mit konzentrisch verlaufenden Leitungsbahnen und einen an einem ringscheibenförmigen Segment (34) der Schleifringanordnung (14) unverdrehbar angeordneten Bürstenteller (72) aufweist.

2. Werkzeugadapter nach Anspruch 1, **dadurch gekennzeichnet, dass** das ringscheibenförmige Segment (34) nach radial innen axial abgesetzt ausgebildet ist und somit einen flachen Aufnahmeraum für den Bürstenteller (72) bildet.

3. Werkzeugadapter nach Anspruch 1 oder 2, **dadurch gekennzeichnet, dass** das ringscheibenförmige Segment (34) über Verbindungselemente unverdrehbar mit dem ihm benachbarten Segment (36) des Gehäuseteils (12) der Drehdurchführungseinrichtung (22) für Medien verbunden ist.

4. Werkzeugadapter nach einem der vorhergehenden Ansprüche, **dadurch gekennzeichnet, dass** zur Verdrehsicherung zwischen den Segmenten (36) des Gehäuseteils (12) der Drehdurchführungseinrichtung (22) und/oder zwischen dem werkzeugseitig letzten Segment (36) und dem Segment (34) der Schleifringanordnung form- und/oder klemmschlüssig wirkende Verbindungseelemente vorgesehen sind.

5. Werkzeugadapter nach Anspruch 4, **dadurch gekennzeichnet, dass** die Verbindungselemente zwischen einander zugewandten axialen Anlageflächen der Segmente verdrehsichernd wirken.

6. Werkzeugadapter nach Anspruch 5, **dadurch gekennzeichnet, dass** in den einander zugewandten axialen Anlageflächen der Segmente miteinander fluchtende Sacklöcher (48, 50; 82, 84; 100, 102) vorgesehen sind, in denen zur Herbeiführung einer Verdrehsicherung ein über beide Sacklöcher sich erstreckender Stift (52, 86, 104) eingesetzt ist.

7. Werkzeugadapter nach einem der vorhergehenden Ansprüche, **dadurch gekennzeichnet, dass** die Welle (10) mit ihrer schnittstellenseitigen Stirnfläche mit einer Flanschplatte (6) verschraubt ist, die ihrerseits an die genormte Schnittstelle des Roboters anschraubbar ist und dass die Flanschplatte (6) wie der radiale Flanschabschnitt (32) der Welle auf der werkzeugzugewandten Seite den Gehäuseteil (12) in radialer Richtung axial übergreift, wobei der Gehäuseteil (12) zusätzlich über eine radial vorspringende Halterung (64) gegenüber dem Roboterflansch verdrehgesichert ist.

8. Werkzeugadapter nach einem der vorhergehenden Ansprüche, **dadurch gekennzeichnet, dass** die auf die Welle (10) aufgebrachten Segmente (34, 36) über ein Sicherungselement (38) am zylindrischen Abschnitt (30) der Welle gehalten sind.

9. Werkzeugadapter nach Anspruch 7 oder 8, **dadurch gekennzeichnet, dass** die radial vorspringende Halterung (64) eine axiale Öffnung (66) aufweist, in die ein roboterflanschfester Stift eingreifen kann.

## Claims

1. Tool adaptor on a standardised robotic interface, comprising a rotary lead-through device (22) for fluid media and comprising a slip ring arrangement (14) for transmitting electrical signals or current, the rotary lead-through device (22) comprising a shaft (10) having a cylindrical section (30) and a connecting radially projecting flange section (32) and having media channels (62) running in its longitudinal direction and an annular housing part (12) holding the shaft (10), cooperating with a media feed and having concentric annular grooves (54, 56) open towards the shaft (10), the annular grooves (54, 56) communicating with the media channels (62) via feed openings (60) in the shaft (10), the housing part (12) of the rotary lead-through device (22) and the slip ring arrangement (14) being in the form of annular disc segments (36, 34) and all being capable of being pushed onto the shaft (10) from the same side, **characterized in that** the flange section (32) is on that side of the shaft (10) which faces the tool, **in that** the housing part (12) of the rotary lead-through device (22) comprises a plurality of such annular disc segments (36) cooperating with the media feed and having at least one annular groove (54) open towards the shaft (10) and the respective related shaft (10) has a length adapted to the number of segments (36) and feed openings communicating with the respective annular groove (54) of the segments (36), and **in that** the annular disc segment (34) of the slip ring arrangement (14) is arranged between the last segment (36) of the rotary lead-through device (22) on the tool side and the radial flange section (32) of the shaft (10), which flange section axially overlaps the fixed housing part (12), and **in that** the slip ring arrangement (14) has a slip ring plate (70) non rotatable with the flange section (32) and having concentric pathways and a brush disc (72) arranged nonrotatably on an annular disc segment (34) of the slip ring arrangement (14).

2. Tool adapter according to Claim 1, **characterized in that** the annular disc segment (34) is axially offset in the radially inward direction and thus forms a flat holding space for the brush disc (72).

3. Tool adapter according to Claim 1 or 2, **characterized in that** the annular disc segment (34) is connected via connecting elements nonrotatably to that segment (36) of the housing part (12) of the rotary lead-through device (22) for media, which segment (36) is adjacent to said segment (34).

4. Tool adapter according to any of the preceding claims, **characterized in that** connecting elements having an interlocking and/or clamping effect are provided for preventing rotation between the segments (36) of the housing part (12) of the rotary lead-through device (22) and/or between the last segment (36) on the tool side and the segment (34) of the slip ring arrangement.

5. Tool adapter according to Claim 4, **characterized in that** the connecting elements between facing axial contact surfaces of the segments have a rotation-preventing effect.

6. Tool adapter according to Claim 5, **characterized in that** blind holes (48, 50; 82, 84; 100, 102) flush with one another are provided in the facing axial contact surfaces of the segments, into which blind holes a pin (52, 86, 104) extending over both blind holes is inserted for preventing rotation.

7. Tool adapter according to any of the preceding claims, **characterized in that that** end face of the shaft (10) which is on the interface side is screwed to a flange plate (6), which in turn can be screwed onto the standardised interface of the robot, and **in that** the flange plate (6), like the radial flange section (32) of the shaft, axially overlaps the housing part (12) in the radial direction on the side facing the tool, the housing part (12) additionally being prevented from rotating relative to the robot flange by means of a radially projecting retainer (64).

8. Tool adapter according to any of the preceding claims, **characterized in that** the segments (34, 36) mounted on the shaft (10) are held by means of a securing element (38) on the cylindrical section (30) of the shaft.

9. Tool adapter according to Claim 7 or 8, **characterized in that** the radially projecting retainer (64) has an axial opening (66) which a pin fixed to the robot flange can engage.

## Revendications

1. Adaptateur d'outil sur une interface normalisée de robot, comportant un dispositif de passage tournant (22) pour milieux fluides et un agencement à bague glissante (14) pour la transmission de signaux électriques ou de courant, le dispositif de passage tournant (22) comprenant un arbre (10), avec une partie cylindrique (30), une partie bride (32) consécutive à la première faisant saillie dans le sens radial et des canaux de fluide (62) s'étendant dans son sens longitudinal, et une partie enveloppe (12) de forme annulaire abritant l'arbre (10) et coopérant avec une arrivée de fluide, la partie enveloppe ayant des rainures annulaires (54, 56) concentriques ouvertes vers l'arbre (10), les rainures annulaires (54, 56) communiquant avec les canaux de fluide (62) par le biais d'ouvertures d'admission ménagées dans l'arbre (10), la partie enveloppe (12) du dispositif de passage tournant (22) et l'agencement à bague glissante (14) pouvant être enfilés sur l'arbre (10) depuis le même côté en tant que segments (36, 34) en forme de disques annulaires, **caractérisé en ce que** la partie bride (32) est située sur le côté de l'arbre (10) orienté vers l'outil, **en ce que** la partie enveloppe (12) du dispositif de passage tournant (22) comprend plusieurs de ces segments (36) en forme de disques annulaires coopérant avec l'arrivée de fluide et ayant au moins une rainure annulaire (54) ouverte vers l'arbre (10) et **en ce que** l'arbre (10) concerné présente une longueur adaptée au nombre des segments (36) et des ouvertures d'admission communiquant avec la rainure annulaire concernée (54) des segments (36), et **en ce que** le segment (34) en forme de disque annulaire de l'agencement à bague glissante (14) est agencé entre le dernier segment (36) côté outil du dispositif de passage tournant (22) et la partie bride (32) radiale de l'arbre (10), laquelle partie bride empiète axialement sur la partie enveloppe fixe, et **en ce que** l'agencement à bague glissante (14) présente un disque de bague glissante (70) ayant des pistes conductrices concentriques et ne tournant pas avec la partie bride (32) et un disque à balai (72) agencé de manière à ne pas pouvoir être tourné sur un segment en forme de disque annulaire (34) de l'agencement à bague glissante (14).

2. Adaptateur d'outil selon la revendication 1, **caractérisé en ce que** le segment en forme de disque annulaire (34) est réalisé avec une découpe axiale à l'intérieur dans le sens radial et forme ainsi un espace de réception plat pour le disque à balai (72).

3. Adaptateur d'outil selon les revendications 1 ou 2, **caractérisé en ce que** le segment en forme de disque annulaire (34) est relié de manière non rotative par le biais d'éléments de liaison au segment voisin (36) de la partie enveloppe (12) du dispositif de passage tournant (22) pour fluides.

4. Adaptateur d'outil selon l'une des revendications précédentes, **caractérisé en ce que**, pour le blocage anti-rotation entre les segments (36) de la partie enveloppe (12) du dispositif de passage tournant (22) et/ou entre le dernier segment (36) côté outil et le segment (34) de l'agencement à bague glissante, il est prévu des éléments de liaison agissant par correspondance de forme et/ou par serrage.

5. Adaptateur d'outil selon la revendication 4, **caractérisé en ce que** les éléments de liaison font office de sécurité anti-rotation entre les surfaces d'appui axiale des segments orientées l'une vers l'autre.

6. Adaptateur d'outil selon la revendication 5, **caractérisé en ce qu'**il est prévu dans les surfaces d'appui axiales des segments orientées l'une vers l'autre des trous borgnes alignés entre eux (48, 50 ; 82, 84 ; 100, 102) dans lesquels il est installé une broche (52, 86, 104) s'étendant dans les deux trous borgnes afin de créer un blocage anti-rotation.

7. Adaptateur d'outil selon l'une des revendications précédentes, **caractérisé en ce que** l'arbre (10) est vissé avec sa surface frontale côté interface sur une plaque de bride (6) qui peut à son tour être vissée sur l'interface normalisée du robot et **en ce que** la plaque de bride (6), comme la partie bride radiale (32) de l'arbre sur le côté orienté vers l'outil, empiète sur l'enveloppe (12) axialement dans le sens radial, la partie enveloppe (12) étant en plus bloquée contre la rotation par rapport à la bride de robot par le biais d'une fixation (64) faisant saillie dans le sens radial.

8. Adaptateur d'outil selon l'une des revendications précédentes, **caractérisé en ce que** les segments (34, 36) montés sur l'arbre (10) sont maintenus sur la partie cylindrique (30) de l'arbre par le biais d'un élément de blocage (38).

9. Adaptateur d'outil selon les revendications 7 ou 8, **caractérisé en ce que** la fixation (64) faisant saillie dans le sens radial présente une ouverture axiale (66) dans laquelle peut être insérée une broche fixée à la bride de robot.
